# EUROPÄISCHE PATENTSCHRIFT

(11) **EP 2 799 205 B1**
(45) Veröffentlichungstag und Bekanntmachung des Hinweises auf die Patenterteilung: **12.07.2017**
(21) Anmeldenummer: 14166876.4
(22) Anmeldetag: 02.05.2014
(51) Int. Cl.: B29C 45/14, B29L 31/56, B32B 27/32, B65D 77/20, B65D 41/00

(54) **Matrix-Barcode auf hinterspritzter Folie**
Matrix barcode on back-injected film
Code-barre matriciel sur feuille moulée par injection

(30) Priorität: 03.05.2013 DE 202013004180 U
(43) Veröffentlichungstag der Anmeldung: 05.11.2014
(73) Patentinhaber: mega-tel AG/SA, 3073 Gümligen (CH)
(72) Erfinder: Chappuis, Pierre, 79618 Rheinfelden (DE)
(74) Vertreter: Rupp, Christian

(56) Entgegenhaltungen:
- EP-A1- 0 894 600
- EP-A1- 0 913 791
- EP-A1- 1 123 791
- WO-A1-03/045673
- CH-A- 472 960
- JP-A- H10 156 871
- JP-A- 2006 146 745
- US-A- 4 076 790
- US-A1- 2004 227 267
- US-A1- 2007 218 227
- US-A1- 2010 291 329

## Beschreibung

Die vorliegende Erfindung bezieht sich auf einen gespritzten Kunststoffgegenstand, insbesondere einen Verschlussdeckel für Behälter, eine Folie zur Verwendung in einer Spritzgussform, einen gespritzten Gegenstand aufweisend die Folie sowie ein System bestehend aus dem gespritzten Gegenstand und einem optischen Auslesegerät.

Jeder Verschluss - ausgestattet mit einer Erstöffnungsgarantie - erhält damit eine einmalige und unverwechselbare Identität, mit der das verschlossene Produkt über die gesamte Lieferkette vom Hersteller bis zum Endabnehmer lückenlos bis auf Produktebene dokumentiert werden kann. Zudem vermittelt das Verfahren alle Informationen über das Produkt wie Produktionsdaten, Zusammensetzung, Anwendungsvorschriften usw., die in einer entsprechenden Datenbank gespeichert sind.

Aus der US 4 076 790 A ist eine Methode bekannt, ein Folienblatt während dem Herstellungsprozesses eines thermoplastischen Objekts in das Objekt einzubinden.

Aus der EP 1 910 983 B1 ist ein gespritzter Gegenstand aus Kunststoff bekannt, der eine mit dem Kunststoffmaterial des Gegenstandes hinterspritzte Folie und ein zwischen der Folie und dem gespritzten Kunststoffmaterial des Gegenstandes oder in der Folie integriert vorgesehenes RFID-Modul (insbesondere ein NFC-Chip) aufweist, wobei das RFID-Modul Antennen aufweist und die Folie gelocht ist. Weiterhin weist das RFID-Modul ein Loch auf und das Loch des RFID-Moduls ist konzentrisch um das Loch der Folie angeordnet, so dass sich das Material für den Spritzgießvorgang durch das Loch in der Folie und das Loch des RFID-Moduls hindurch einbringen lässt. Hierdurch lassen sich beispielsweise Verschlussdeckel herstellen. Allerdings sind die Kosten für ein derartiges RFID-Modul (oder NFC-Transponders) im Vergleich zu den Gesamtkosten eines gespritzten Gegenstandes, insbesondere eines einfachen gespritzten Verschlussdeckels, relativ hoch. Weiterhin bedingt ein mit einem RFID-Modul (oder NFC-Chip) versehener Kunststoffgegenstand aufgrund der Materialmischung besondere technische Massnahmen beim Recycling.

Dementsprechend ist es eine Aufgabe der vorliegenden Erfindung, einen verbesserten, insbesondere in der Herstellung kostengünstigeren, gespritzten Kunststoffgegenstand, eine Folie zur Verwendung in einer Spritzgussform, einen gespritzten Gegenstand aufweisend die Folie und ein System bestehend aus dem gespritzten Gegenstand und einem optischen Auslesegerät bereitzustellen.

Diese Aufgabe wird durch die Gegenstände der unabhängigen Patentansprüche 1, and 11 gelöst. Weitere vorteilhafte Ausgestaltungen sind in den abhängigen Ansprüchen zu finden.

Gemäß einem ersten Aspekt der Erfindung wird eine Folie zur Verwendung in einer Spritzgussform bereitgestellt, aufweisend zumindest einen Matrix-Barcode, der auf der Folie vorgesehen bzw. positioniert ist und zumindest ein Loch in der Folie, so dass sich ein Material durch einen Spritzgussvorgang durch das Loch der Folie hindurch in die Spritzgussform einbringen lässt. Die Hinterspritzung der Folie durch das Loch sorgt für eine besonders feste und innige Verbindung zwischen der Folie und dem eingebrachten Material. Auch wird durch die Bereitstellung des Matrix-Barcodes anstatt eines RFID-Moduls eine Folie in kostengünstigerer und effektiverer Weise hergestellt. Da die Wiederverwendbarkeit der Folie bzw. des damit zu versehenden Kunststoffgegenstandes bei Verwendung eines RFID-Moduls aufgrund der

Materialmischung verringert ist, wird durch die Bereitstellung des Matrix-Barcodes die Recyclingfähigkeit erhöht.

Gemäß zumindest einer Ausführungsform der Folie kann der Matrix-Barcode mittels eines Druckverfahrens auf die Folie aufgedruckt werden. Jedoch sind hierbei auch andere Verfahren zum Aufbringen des Matrix-Barcodes denkbar, insbesondere durch Aufkleben eines Matrix-Barcodes beispielsweise mit Hilfe eines Klebemittels oder Aufbringen des Matrix-Barcodes mit Hilfe eines Lasers oder mittels Ink-Jet.

Gemäß zumindest einer Ausführungsform der Folie kann das zumindest eine Loch innerhalb der Fläche des zumindest einen Matrix-Barcodes liegen. Alternativ kann gemäß zumindest einer anderen Ausführungsform der Folie das zumindest eine Loch außerhalb des zumindest einen Matrix-Barcodes positioniert sein. Sind mehrere Matrix-Barcodes vorgesehen, so können beide außerhalb des das Loch aufweisenden Bereichs der Folie vorgesehen sein oder alternativ kann das Loch auch innerhalb der Fläche wenigstens eines oder mehrerer Matrix-Barcodes liegen.

Gemäß zumindest einer Ausführungsform der Folie kann das zumindest eine Loch bei kreisförmiger Ausgestaltung der Folie in der Mitte der Folie vorgesehen sein.

Gemäß zumindest einer Ausführungsform der Folie kann die Folie vorzugsweise mit einem Kunststoffmaterial beschichtet sein. Die Beschichtung kann entweder auf die Folie aufgetragen oder als separate Schicht auf die Folie aufgebracht werden. Vorzugsweise ist die Beschichtung wenigstens auf der den Matrix-Barcode aufweisenden Seite der Folie vorgesehen. Die Beschichtung dient in diesem Fall vorzugsweise als Schutzschicht bzw. Schutzfolie des Matrix-Barcodes. Folglich kann eine mehrlagige Folie (Sandwich-Folie) bereitgestellt werden, wobei die vorbezeichnete Folie als Trägerfolie für den beispielsweise aufzudruckenden Matrix-Barcode dient, während die Beschichtung eine den Matrix-Barcode abdeckende Schutzfolie bildet. Die Beschichtung kann folglich den Schutz des Matrix-Barcodes vor äußeren Einflüssen, wie etwa UV-Strahlung, oder mechanischem Abrieb, wie Verkratzen, sicherstellen.

Gemäß zumindest einer Ausführungsform der Folie kann das Kunststoffmaterial der Beschichtung Polyethylen (PE) sein.

Gemäß zumindest einer Ausführungsform der Folie kann die Folie aus Polypropylen, hochdichtem Polyethylen oder einem anderen lichtdurchlässigen, geeigneten Polymer bestehen. Hierbei wird es ermöglicht, dass der Matrix-Barcode von außen vom Betrachter aus besonders gut sichtbar ist und beispielsweise durch ein Auslesegerät ausgelesen werden kann; insbesondere dann, wenn keine zusätzliche Schutzfolie (Beschichtung) vorgesehen ist und die Folie (Trägerfolie) den (einzigen) Schutz nach außen bildet.

Gemäß einem zweiten Aspekt der vorliegenden Erfindung weist ein gespritzter Gegenstand eine mit dem Material des Gegenstands hinterspritzte Folie gemäß der Erfindung auf, wobei sich das Material durch das zumindest eine Loch in der Folie für den Spritzgussvorgang hindurch in die Spritzgussform einbringen lässt. Durch die Hinterspritzung kann eine besonders innige Verbindung zwischen der Folie und dem gespritzten Material entstehen. Weiterhin kann die optionale Beschichtung der Folie mit einem Kunststoffmaterial den Schutz des Matrix-Barcodes vor äußeren Einflüssen gewährleisten.

Gemäß zumindest einer Ausführungsform des gespritzten Gegenstandes kann sich die Folie an einer Oberseite des gespritzten Gegenstandes befinden und der zumindest eine Matrix-Barcode kann von der Sichtseite (also in der Regel der Außenseite bzw. der dem Betrachter zugewandten Seite des gespritzten Gegenstandes) her gesehen unterhalb - also auf der Rückseite-der Folie (Trägerfolie oder Schutzfolie) vorgesehen sein. Dadurch kann ein gespritzter Gegenstand entstehen, wobei die Folie (bspw. Trägerfolie) selbst als äußere Schicht den Matrix-Barcode vor äußeren Einflüssen, wie beispielsweise UV-Strahlung oder mechanischem Abrieb, schützen kann.

Gemäß zumindest einer Ausführungsform des gespritzten Gegenstandes kann das Material des gespritzten Gegenstandes Kunststoff sein; insbesondere ein Material, welches in einem Spritzgießvorgang in eine entsprechende Form eingebracht werden kann und dessen Bearbeitungstemperatur keine Beschädigung der Folie verursacht. Da keine elektronischen Komponenten (wie bspw. RFID-Module) in der Folie vorgesehen sind, können höhere Bearbeitungstemperaturen ermöglicht werden, was wiederum das Spektrum an zu verwendenden Materialien für den gespritzten Gegenstand, dessen Geometrie und Dimensionen sowie die Qualität desselben vergrößert.

Gemäß zumindest einer Ausführungsform ist der gespritzte Gegenstand ein Verschlussdeckel für Behälter.

Gemäß einem dritten Aspekt der vorliegenden Erfindung wird ein System bereitgestellt, bestehend aus dem gespritzten Gegenstand gemäß einer der vorherigen Ausführungsformen und einem optischen Auslesegerät, das geeignet ist, den zumindest einen Matrix-Barcode vom gespritzten Gegenstand optisch auszulesen.

Gemäß zumindest einer Ausführungsform kann das Auslesegerät den zumindest einem Matrix-Barcode in einen für einen Benutzer lesbaren Ausdruck übersetzen.

Gemäß zumindest einer Ausführungsform des Systems kann der optisch ausgelesene Matrix-Barcode an einen Server übermittelt werden, um dort zentral für logistische Auswertungen und/oder Entscheidungen bereitgestellt zu werden. Zur Übermittlung ist vorzugsweise das optische Auslesegerät entsprechend ausgebildet.

Weitere Merkmale, Vorteile und Eigenschaften der Erfindung sollen nunmehr anhand der Ausführungsbeispiele und der Figuren der begleitenden Zeichnungen erläutert werden.
Figs. 1a - 1d zeigen vier verschiedene Draufsichten von erfindungsgemäßen Folien.
Figs. 2a - 2d zeigen weitere Draufsichten von erfindungsgemäßen Folien in einer vergrößerten Ansicht.

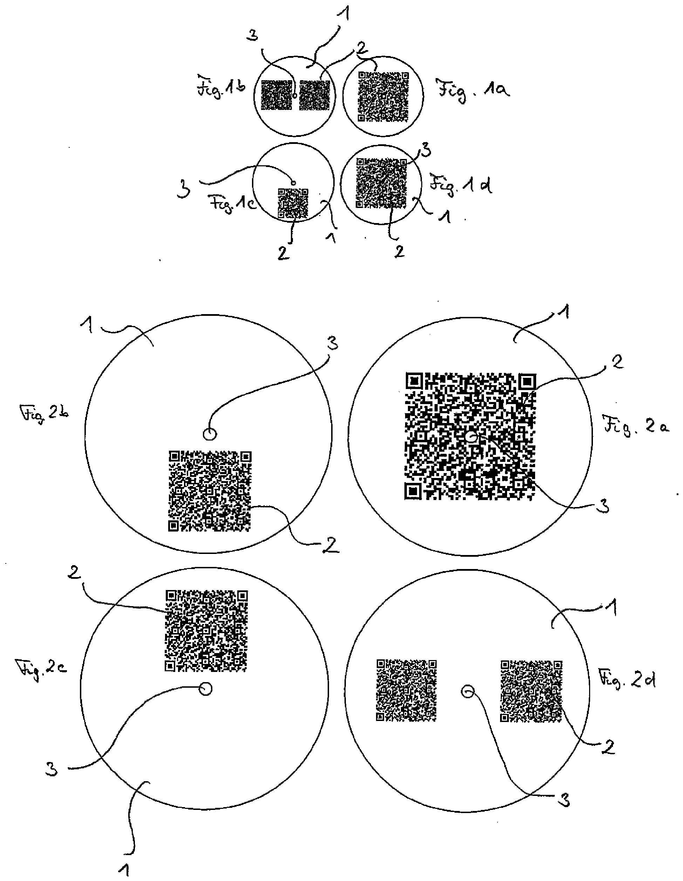

Dabei zeigen die Figs. 1a - 1d verschiedene Positionierungen von Matrix-Barcodes 2 auf einer kreisförmig ausgestalteten Folie 1. Die Folie 1 kann jedoch auch jede andere symmetrische oder asymmetrische Form (bspw. quadratisch, rechteckig, mehreckig, oval, rund etc.) aufweisen. Fig. 1a zeigt eine kreisförmig ausgestaltete Folie 1 auf welcher ein Matrix-Barcode (zweidimensionaler Code) 2 aufgedruckt ist oder aufgrund von anderen Aufbringungsverfahren auf der Folie 1 aufgebracht bzw. vorgesehen ist. In der Folie 1 ist ein Loch bzw. eine Ausnehmung 3 vorgesehen. Dabei kann sich das Loch 3 beispielsweise in der Mitte der kreisförmig ausgestalteten Folie 1 befinden. Weiterhin kann der Matrix-Barcode 2, der vorzugsweise als quadratische Fläche ausgestaltet ist, ebenfalls derart positioniert sein, dass dieser beispielsweise in der Mitte (vgl. Fig.1a) oder in einem anderen Bereich des Matrix-Barcodes das Loch 3 aufweist. Dabei ist es kein Problem, dass das Loch 3 innerhalb des Matrix-Barcodes 2 positioniert ist, da die Informationen auf dem Matrix-Barcode 2 mehrfach enthalten sind und somit eine erhöhte Redundanz der Informationen vorhanden ist. Die Folie 1 wird vorzugsweise in eine Spritzgussform eingelegt bzw. positioniert und das Material für den Spritzgießvorgang wird durch einen Einspritzkanal, der durch das Loch 3 in die Spritzgussform führt, eingebracht. Dadurch kann eine Hinterspritzung der Folie 1 erfolgen. Der Einspritzkanal hat üblicherweise und bevorzugt einen Durchmesser von 1 - 3mm, so dass das Loch 3, welches vorzugsweise wenigstens denselben Durchmesser wie der Einspritzkanal hat, und auch wenn es direkt durch den Barcode 2 führt bzw. in dem Bereich des Matrix-Barcodes 2 vorgesehen ist, aufgrund der redundanten Ausgestaltung des Matrix-Barcodes 2 kein Problem (also bspw. Informationsverlust) darstellt.

Figs. 1b - 1d zeigen weitere Ausführungsformen der Positionierung des Matrix-Barcodes 2 auf der Folie 1. Beispielsweise können, wie in Fig. 1b dargestellt, zwei Matrix-Barcodes seitlich von Loch 3 positioniert sein und das Loch 3 sich außerhalb der Matrix-Barcodes 2 befinden. Gemäß Fig. 1c kann aber auch der Matrix-Barcode 2 unterhalb des Lochs 3 positioniert sein. Mit anderen Worten kann/können der/die Matrix-Barcode(s) 2 mit der Ausnehmung bzw. dem Loch 3 für den Einspritzkanal überlappen oder seitlich davon angeordnet sein. Die Form der Folie 1, die Positionierung und die Anzahl der Matrix-Barcodes (auch bzgl. des Loches 3) ist jedoch nicht auf die in den Figs. 1a - 1d oder Figs. 2a - 2d dargestellten Ausführungsformen beschränkt. Vielmehr kann dies, je nach den speziellen Anforderungen der Praxis, beliebig gewählt und variiert werden.

Die Folie 1 kann dabei für die Herstellung eines gespritzten Kunststoffgegenstandes, insbesondere eines Verschlussdeckels für Behälter, verwendet werden, wobei die Folie 1 als Trägerfolie vorgesehen sein kann. Neben Verschlussdeckeln kann die Folie 1 auch auf anderen Gegenständen wie Seitenflächen von Bierkästen und dergleichen vorgesehen sein. Die Folie bzw. Trägerfolie 1 wird mit dem Matrix-Barcode(s) 2 versehen (bspw. bedruckt). Die Trägerfolie 1 kann ferner mit einer Beschichtung versehen werden. Diese Beschichtung kann eine weitere Schutzschicht bzw. Schutzfolie bilden und ist vorzugsweise auf der den Matrix-Barcode 2 aufweisenden Seite der Folie 1 vorgesehen, um den Matrix-Barcode 2 vor äußeren Einflüssen schützen zu können. Auf diese Weise kann eine mehrlagige Sandwich-Folie bereitgestellt werden. Vorzugsweise ist die Beschichtung aus einem lichtdurchlässigen Kunststoff bereitgestellt. In diesem Fall bildet die Schutzschicht vorzugsweise die dem Betrachter zugewandte Seite der Folie, wenn sie in einem gespritzten Kunststoffgegenstand hinterspritzt eingebracht ist, um von außen lesbar aber dennoch von der Umgebung geschützt bereitgestellt zu sein.

In einer weiteren Variation kann die Folie 1 aber auch vom Betrachter aus gesehen die äußerste Schicht bilden. Insbesondere in einem gespritzten Gegenstand hinterspritzt eingebracht ist der Matrix-Barcode 2 dann vom Betrachter aus gesehen vorzugsweise auf der Innenseite bzw. Rückseite der Folie 1 vorgesehen, sodass die Folie 1 selbst eine Schutzschicht für den Matrix-Barcode 2 bildet. In diesem Fall muss nicht unbedingt eine weitere Schutzschicht (auf der dann innenliegenden Seite der Folie bzgl. des gespritzten Gegenstandes) vorgesehen sein; diese kann aber zum Schutz des Matrix-Barcodes 2 gegenüber dem einzuspritzenden Material vorteilhaft sein. Andererseits kann die Folie 1, wie zuvor beschrieben, auch mit einem Kunststoffmaterial, insbesondere Polyethylen (PE), Polypropylen (PP), oder einem anderen Material oder einer Folienschicht beschichtet sein. Als Schutzschicht bzw. Schutzfolie ausgebildet bildet diese Beschichtung vorzugsweise vom Betrachter aus gesehen die oberste Schicht der Folie 1; befindet sich also vorzugsweise bei Vorsehen der Folie an einer Oberseite des gespritzten Gegenstandes auf der Sichtseite bzw. Außenseite des gespritzten Gegenstandes. Zwischen der Folie 1 und der Beschichtung ist dann der Matrix-Barcode 2 vorgesehen.

Die Folie 1 selbst kann aus Polypropylen (PP), hochdichtem Polyethylen oder einem anderen lichtdurchlässigen Polymer bestehen, insbesondere wenn sie zur Außenseite bzw. Sichtseite eines gespritzten Gegenstandes gerichtet in diesem vorgesehen ist. Durch Bereitstellung der Folie 1 und/oder der optionalen Beschichtungen aus lichtdurchlässigen Material, also wenigstens der Folienlage, welche in dem gespritzten Gegenstand nach außen zur Sichtseite hin gerichtet ist, kann vorteilhafterweise der Matrix-Barcode 2 von einem Auslesegerät besonders einfach und gut ausgelesen werden und/oder diese Informationen an einen Server übermittelt werden, um dabei logistische Auswertungen und/oder Entscheidungen treffen zu können. Dabei kann der Matrix-Barcode 2 Herkunftsbezeichnungen, Inhaltsangaben und andere sicherheitsrelevante Informationen enthalten. Zur Fälschungssicherheit kann der Matrix-Barcode 2 eine durchlaufende Nummerierung enthalten. Als Auslesegerät kann beispielsweise ein Smartphone mit einem Barcode-Scanner (in der Regel bestehend aus einer Kamera und einer Barcode-Scanner-Software) verwendet werden.

Figs. 2a - 2d zeigen weitere Draufsichten von erfindungsgemäßen Folien in einer vergrößerten Ansicht. Dabei zeigt beispielsweise Fig. 2a wieder ein Loch 3, das in der Mitte der kreisförmigen Folie 1 positioniert ist, wobei gleichzeitig das Loch 3 mittig in dem Matrix-Barcode 2 liegt. Wie bereits hinsichtlich den Figs. 1a - 1d erwähnt, kann die Anzahl der Matrix-Barcodes, die Positionierung der Matrix-Barcodes auf der Folie als auch die Form der Folie 1 frei gestaltet und gewählt werden. Weiterhin ist es auch denkbar, dass nicht nur ein Loch 3 in Folie 1 bereitgestellt wird, sondern mehrere Löcher, um beispielsweise den Spritzgussvorgang beschleunigen zu können.
Zum grundsätzlichen Aufbau von Folien sowie dem Verfahren zum Hinterspritzen derselben wird auch auf die Ausführungen in der EP 1 910 983 B1 verwiesen. Die Erfindung ist nicht durch die Beschreibung anhand der Ausführungsbeispiele beschränkt. Vielmehr sind alle Merkmale beliebig miteinander kombinierbar, solange der Gegenstand weiterhin von den Ansprüchen umfasst ist. Beispielsweise kann weiterhin im Rahmen der Erfindung anstatt eines Matrix-Barcodes auch jeder andere denkbare insbesondere zweidimensionale Code verwendet werden. Weiterhin kann anstatt oder in Kombination mit einem Matrix-Barcode ein Strichcode Verwendung finden. Dabei können auf einer Folie verschiedene Arten von zweidimensionalen Codes oder in Kombination mit eindimensionalen Codes verwendet werden. Auch sind hinsichtlich der Ausgestaltung der Form der Folie keinerlei Begrenzungen vorhanden. Die Folie kann kreisförmig, rechteckig oder auch in jeglicher anderen Form ausgebildet sein.

### Bezugszeichenliste:

- 1: Folie
- 2: Matrix-Barcode
- 3: Loch

## Patentansprüche

1. Folie (1) zur Verwendung in einer Spritzgussform aufweisend:
zumindest ein Loch (3) in der Folie (1), so dass sich ein Material für einen Spritzgussvorgang durch das Loch (3) der Folie (1) hindurch in die Spritzgussform einbringen lässt,
**dadurch gekennzeichnet, dass**
zumindest ein Matrix-Barcode (2)-auf der Folie (1) vorgesehen ist, wobei das zumindest eine Loch (3) innerhalb der Fläche des zumindest einen Matrix-Barcodes (2) liegt.

2. Folie (1) gemäß Anspruch 1, wobei der Matrix-Barcode (2) auf der Folie (1) mittels eines Druckverfahrens aufgedruckt ist.

3. Folie (1) gemäß Anspruch 1 oder 2, wobei das zumindest eine Loch (3) bei kreisförmiger Ausgestaltung der Folie (1) in der Mitte der Folie (1) vorgesehen ist.

4. Folie (1) gemäß einem der Ansprüche 1 bis 3, wobei die Folie (1) wenigstens auf der den Matrix-Barcode aufweisenden Seite mit einem Kunststoffmaterial beschichtet ist, vorzugsweise eine Kunststoff-Schutzschicht aufweist.

5. Folie (1) gemäß Anspruch 4, wobei das Kunststoffmaterial Polyethylen (PE) ist.

6. Folie (1) gemäß einem der Ansprüche 1 bis 5, wobei die Folie (1) aus Polypropylen, hochdichtem Polyethylen oder einem anderen vorzugsweise lichtdurchlässigen, geeigneten Polymer besteht.

7. Gespritzter Gegenstand, insbesondere Kunststoffgegenstand, aufweisend eine mit dem Material des Gegenstandes hinterspritzt Folie (1), wobei sich das Material durch das zumindest eine Loch (3) in der Folie (1) für den Spritzgießvorgang hindurch in die Spritzgießform einbringen lässt, **dadurch gekennzeichnet, dass** die Folie gemäß einem der Ansprüche 1 bis 6 ausgebildet ist.

8. Gespritzter Gegenstand gemäß Anspruch 7, wobei sich die Folie (1) an einer Oberseite des gespritzten Gegenstandes befindet und der zumindest eine Matrix-Barcode (2) von der Sichtseite gesehen auf der Rückseite der Folie (1) vorgesehen ist.

9. Gespritzter Gegenstand gemäß einem der Ansprüche 7 bis 8, wobei das Material ein Kunststoff ist.

10. Gespritzter Gegenstand nach einem der Ansprüche 7 bis 9, wobei der Gegenstand ein Verschlussdeckel für Behälter ist.

11. System bestehend aus dem gespritzten Gegenstand gemäß einem der Ansprüche 7 bis 10 und einem optischen Auslesegerät, das geeignet ist, den zumindest einen Matrix-Barcode (2) vom gespritzten Gegenstand optisch auszulesen.

12. System gemäß Anspruch 11, wobei das Auslesegerät derart ausgebildet ist, den zumindest einen Matrix-Barcode (2) auf einer integrierten Anzeigenvorrichtung anzuzeigen.

13. System gemäß Anspruch 11 oder 12, wobei das Auslesegerät den zumindest einen Matrix-Barcode (2) in einen für einen Benutzer lesbaren Ausdruck übersetzt.

14. System gemäß einem der Ansprüche 11 bis 13, wobei das optische Auslesegerät derart ausgebildet ist, den optisch ausgelesenen Matrix-Barcode (2) an einen Server zu übermitteln, um dort für logistische Auswertungen und/oder Entscheidungen bereitgestellt zu werden.

## Claims

1. A film (1) for use in an injection mould comprising:
at least one perforation (3) in the film (1), so that a material for an injection-moulding process can be introduced through the perforation (3) of the film (1) into the injection mould,
**characterised in that**
at least one matrix barcode (2) is provided on the film (1), wherein the at least one perforation (3) is disposed within the area of the at least one matrix barcode (2).

2. The film (1) according to claim 1, wherein the matrix barcode (2) is printed onto the film (1) by means of a printing method.

3. The film (1) according to claim 1 or 2, wherein, in the case of a circular embodiment of the film (1), the at least one perforation (3) is provided in the centre of the film (1).

4. The film (1) according to any one of claims 1 to 3, wherein, at least on the side comprising the matrix barcode, the film (1) is coated with a synthetic material, preferably comprises a synthetic-material protective layer.

5. The film (1) according to claim 4, wherein the synthetic material is polyethylene (PE).

6. The film (1) according to any one of claims 1 to 5, wherein the film (1) consists of polypropylene, high-density polyethylene or another suitable, preferably light-permeable polymer.

7. An injection-moulded article, especially a synthetic-material article, comprising a film (1) back-injected with the material of the article, wherein the material can be introduced into the injection mould through the at least one perforation (3) in the film (1), **characterised in that** the film is embodied according to any one of claims 1 to 6.

8. The injection-moulded article according to claim 7, wherein the film (1) is disposed on an upper side of the injection-moulded article, and the at least one matrix barcode (2) is provided on the rear side of the film (1) viewed from the visible side.

9. The injection-moulded article according to any one of claims 7 to 8, wherein the material is a synthetic material.

10. The injection-moulded article according to any one of claims 7 to 9, wherein the article is a closure lid for containers.

11. A system consisting of an injection-moulded article according to any one of claims 7 to 10 and an optical reader device which is suitable for optical reading out of the at least one matrix barcode (2) from the injection-moulded article.

12. The system according to claim 11, wherein the reader device is embodied in such a manner to display the at least one matrix barcode (2) on an integrated display device.

13. The system according to claim 11 or 12, wherein the reader device translates the at least one matrix barcode (2) into a printout readable by a user.

14. The system according to any one of claims 11 to 13, wherein the optical reader device is embodied in such a manner to communicate the optically read out matrix barcode (2) to a server in order to be presented there for logistical evaluations and/or decisions.

## Revendications

1. Film (1) pour utilisation dans un moule d'injection comprenant :
au moins un trou (3) dans le film (1), de sorte qu'un matériau pour un procédé d'injection peut être introduit dans le moule d'injection à travers le trou (3) du film (1),
**caracterisé en ce que**
au moins un code-barres matriciel (2) est prévu sur le film (1), l'au moins un trou (3) étant situé dans la surface de l'au moins un code-barres matriciel (2).

2. Film (1) selon la revendication 1, dans lequel le code-barres matriciel (2) est imprimé sur le film (1) au moyen d'un procédé d'impression.

3. Film (1) selon la revendication 1 ou 2, dans lequel l'au moins un trou (3) est prévu dans le milieu du film (1) dans une configuration en forme de cercle du film (1).

4. Film (1) selon l'une des revendications 1 à 3, dans lequel le film (1) est revêtu, au moins sur la face présentant le code-barres matriciel, d'un matériau plastique, de préférence présentant une couche de protection en plastique.

5. Film (1) selon la revendication 4, dans lequel le matériau plastique est un polyéthylène (PE).

6. Film (1) selon l'une des revendications 1 à 5, dans lequel le film (1) est composé de polypropylène, de polyéthylène haute densité ou d'un autre polymère approprié laissant de préférence passer la lumière.

7. Objet injecté, en particulier objet en matière plastique, ayant un film (1) moulé par étiquetage au moulage avec le matériau de l'objet, dans lequel le matériau peut être introduit dans le moule d'injection à travers le trou (3) du film (1) pour le procédé d'injection, **caractérisé en ce que** le film est formé selon l'une des revendications 1 à 6.

8. Objet injecté selon la revendication 7, dans lequel le film (1) se trouve sur une face supérieure de l'objet injecté et l'au moins un code-barres matriciel (2), vu de la face visible, est prévu sur la face dorsale du film (1).

9. Objet injecté selon l'une des revendications 7 à 8, dans lequel le matériau est un matériau plastique.

10. Objet injecté selon l'une des revendications 7 à 9, dans lequel l'objet est un couvercle de fermeture pour récipient.

11. Système comprenant l'objet injecté selon l'une quelconque des revendications 7 à 10 et un appareil de lecture optique, qui est adapté pour lire optiquement l'au moins un code-barres matriciel (2) de l'objet injecté.

12. Système selon la revendication 11, dans lequel l'appareil de lecture est configuré pour afficher l'au moins un code-barres matriciel (2) sur un dispositif d'affichage intégré.

13. Système selon la revendication 11 ou 12, dans lequel l'appareil de lecture traduit l'au moins un code-barres matriciel (2) en une expression lisible pour un utilisateur.

14. Système selon l'une des revendications 11 à 13, dans lequel l'appareil de lecture optique est configuré de façon à transmettre à un serveur le code-barres matriciel (2) lu optiquement, pour y être disponible pour des évaluations et/ou des décisions logistiques.
